# EUROPEAN PATENT SPECIFICATION

(11) **EP 3 429 044 B1**
(45) Date of publication and mention of the grant of the patent: **18.10.2023**
(21) Application number: 17181401.5
(22) Date of filing: 14.07.2017
(51) Int. Cl.: H02G 15/18, B29C 65/00, B29C 65/34, B29C 65/36, B29C 61/06

(54) **HEAT SHRINK COMPONENT AND METHOD OF ASSEMBLING A HEAT SHRINK COMPONENT**
WÄRMESCHRUMPFBARES BAUTEIL UND VERFAHREN ZUM ZUSAMMENBAU EINES WÄRMESCHRUMPFBAREN BAUTEILS
COMPOSANT THERMORÉTRACTABLE ET PROCÉDÉ D'ASSEMBLAGE D'UN COMPOSANT THERMORÉTRÉCISSABLE

(43) Date of publication of application: 16.01.2019
(73) Proprietor: Tyco Electronics Raychem GmbH, 85521 Ottobrunn (DE)
(72) Inventor: SIMONSOHN, Thilo, 81735 München (DE); HEINDL, Christian, 80807 München (DE)
(74) Representative: Grünecker Patent- und Rechtsanwälte PartG mbB

(56) References cited:
- EP-A1- 0 008 912
- EP-A1- 0 024 179
- WO-A1-02/19494
- DE-A1- 2 410 289
- FR-A1- 2 512 394
- US-A- 4 177 446

## Description

The present invention relates to a heat shrink component and to a method of assembling a heat shrink component.

Heat shrink components in the sense of the present invention relate to articles that are made from material which shrinks from an expanded state into a shrunk state with much smaller dimensions by applying a sufficient amount of heat. Heat shrink components are widely spread as joint sleeves or other cable accessories.

The present invention utilizes a heat-recoverable article (an independently dimensionally heat-unstable article) as a heat shrink layer. In general, such an article is made of a material capable of having the property of elastic or plastic memory imparted thereto which is heated to a certain temperature and distorted under pressure to a configuration different from its normal configuration and then cooled while kept under pressure. If the article is made of a material which is wholly or partly crystalline, is at least partly cross-linked in the amorphous areas, and is distorted at a temperature at or above the crystalline melting point of the material, the article will have elastic memory. An article with elastic memory will not recover towards its original configuration until it is again heated at least to its crystalline melting temperature. If the article is made of a non-crystalline material, it is heated to a temperature at which the article can be distorted by pressure, and the distorted article then has the property of plastic memory. Examples of heat-recoverable materials are found in U.S. Pat. No. 2,027,962 and U.S. Pat. No. 3,086,242. Of course the heat shrink layer can be fabricated from any suitable material, as this is known to a person skilled in the art. Moreover, also multilayer arrangements that additionally comprise elastic and/or electrically semi-conductive and conductive layers are encompassed by the present invention.

In order to install heat shrink products for LV, MV, and HV applications, typically open flames, such as gas torches, are used. More rarely, also hot air guns with several kilo watt of power are employed. Hot air guns, however, are limited to thin walled products, like LV sleeves and molded parts with a low wall thickness in the range of 1 to 4 mm. For instance for electronic applications, where sleeves typically have wall thicknesses below 1 mm in the expanded state, hot air guns or tunnel heaters with ceramic radiation features are commonly used.

However, from the stand point of safety at work, the use of open flames is disadvantageous. Furthermore, it is desired to reduce the amount of energy needed for installing products. In some cases it is also desired to reduce the amount of heat generated during installation.

Consequently, it is desirable to use other energy sources than open flames, preferably electrical energy.

It is known to shrink heat shrinking products by adding at least one layer to the product that transforms electrical energy into heat. From DE 1941327 A1, an electrically conductive heat-recoverable article is known which is caused to recover by passing an electrical current through the article to raise it to its recovery temperature. The conductive article, e.g. a tubular sleeve, is placed in good heat-transfer relationship to an electrically non-conductive heat recoverable member, e.g. a tubular sleeve, so as to act as heater for this non-conductive member, the two members recovering substantially simultaneously. The conductive material of the sleeve is carbon-black filled cross-linked polyethylene which is made heat-recoverable. Other cross-linked polymers, non-crystalline polymers such as polyurethane and ionomers, as well as elastomers such as silicone rubber are disclosed. A conductive sleeve is surrounded by two insulating sleeves, or a slit conductive sleeve surrounds a heat-recoverable non-conductive sleeve and is peeled away after the non-conductive sleeve is fully recovered. Electrical connections to the conductive sleeves are established via alligator clips or other conventional clamps or electrodes.

EP 0 008 912 A1 relates to a heat shrinkable synthetic resin cover adapted to cover a joint between two pipes or an electric cable, the cover comprises a heat shrinkable synthetic resin member in which is embedded a flexible electric heating element made of a conductor coated with a crosslinked polymer having heat shrinkability in substantially one direction such that the electric heating member does not peclude heat shrinkage of the heat shrinkable synthetic resin member in said direction. In use the cover can be heated uniformly from within, thereby promoting substantially uniform shrinkage thereof.

EP 0 024 179 A1 relates to an electrical heating element material of a sheet form is provided, which is comprised of a web of a synthetic resin having a plurality of metal conductor wires arranged therein in parallel to one another along the longitudinal direction of the web. The web is folded in succession at predetermined intervals along folding lines inclined at an acute angle to the transverse direction of the web to form a two-layer rectangular sheet. The electrical heating element material is prepared by supplying a plurality of metal conductor wires arranged in parallel to one another into a cross-head type extrusion die, separately supplying a thermoplastic resin into said die, co-extruding the resin together with the wires to form a web, folding the web in succession at predetermined intervals along folding lines inclined at an acute angle to the transverse direction of the web to form a two-layer rectangular sheet, and then, optionally, bonding together the two layers. The electrical heating element material may be used as a heat-shrinkable cover, which is comprised of a heat-shrinkable synthetic resin member and the electrical heating element material combined with the heat-shrinkable resin member substantially over the entire region thereof.

US 4 177 446 A relates to heating elements comprising conductive polymers which are capable of undergoing a change in dimension. The heating elements comprise a laminar member composed of a conductive polymer and two laminar electrodes connected directly or indirectly to opposite faces of the laminar member, and there are apertures, for example slits, passing through the thickness of the element so that at least one planar dimension of the element can be changed by changing the shape of the apertures. The apertures through the element facilitate its dimensional change. Preferably the laminar member exhibits PTC characteristics. The heating elements are particularly useful in the form of articles in which the element is attached to a heat-responsive sheet, for example a heat-recoverable polymeric film.

However, these known arrangements suffer from the disadvantage that the time for performing the installation is usually above 15 minutes and therefore too long to be cost effective.

Furthermore, it is known to provide heating systems with fluid pipes in order to prevent fluid conducted by the pipes from freezing. These defrosting systems, however, allow only maximum temperatures of about 60 to 80°C and are therefore not applicable for shrinking heat shrink products which require temperatures above 120°C.

Outside the field of energy technology, it is known to use electrical heating for jointing pipes by means of thermoplastic coupling parts. As for instance disclosed in European patents EP 1190839 B1 and EP 0798099 B1, a molded part with embedded wires is positioned over the end portions of the two pipes to be joined. An electronic drive system linked to a power source then generates sufficient heat to melt the ends of the pipes which then are welded with each other and/or the molded part. For this field of application, the pipes essentially do not change their original diameter and each joint component is only used for one particular diameter of pipes. When applying such a system to a heat shrink component which usually undergoes a diameter reduction of around 10 % to 75 % of the expanded diameter during the heat shrink process, the molded part would lose mechanical contact to the heat shrink product.

Finally, there exist multiple heating systems in the art which are based on resistance wires. These wires are made from special metal alloys that have resistance values which are about 10 to 100 times higher than those of copper or aluminum. The disadvantage of using resistance heating wires can be seen in the fact that these standard resistance heating wires have a high specific resistance and therefore provide a high density of dissipated heat energy, so that for reaching a temperature of 120°C and higher by applying a voltage of about 24 V, only a short length of wire is needed. This rather short wire length causes severe problems to properly distribute the heat over the entire surface and volume of a typical heat shrink product such as an MV joint body. In addition, the costs of heating wires are much higher than of for instance copper wire.

The object underlying the present invention is to provide a heat shrink component and a method of shrinking a heat shrink component with an improved performance and reliability, thereby overcoming or at least substantially reducing the above mentioned problems and drawbacks. This object is solved by the subject matter of the independent claims. Advantageous embodiments of the present invention are the subject matter of the dependent claims.

The present invention is based on the idea that by using an electrically conductive lead with a comparably high electrical conductivity for heating a heat shrink layer of any kind of conductivity, including electrically insulating layers, and by setting the overall electrical resistance via the dimension of the lead's cross-section, the temperature for shrinking LV, MV, or HV heat shrink components can be reached in a sufficiently short time span using a length of the electrically conductive lead which is long enough to achieve a satisfactory wire density on the surface of the heat shrink layer and an improved heat distribution. The electrically conductive lead has an electrical conductivity of more than 3·10⁷ S/m, and comprises aluminium and/or copper (copper having an electrical conductivity of 6.0·10⁷ S/m, aluminium having an electrical conductivity of 3.76·10⁷ S/m), and can have a length of about 1 to 15 m if the cross-sectional area is chosen accordingly (e. g. less than 1 mm, preferably less than 0.4 mm diameter for a circular cross-section). The resulting overall resistance of such heating systems may for instance be in a range of 0.3 Ω to 6.0 Ω at 23 °C and the electrically conductive lead can be powered with 5 V to 25 V. Using a material with such comparably high electrical conductivity together with an appropriately reduced cross-sectional area allows covering a larger amount of the surface area of the heat shrink component. More precisely, the circumferential distance between heating wires may be below 50 mm, preferably below 20 mm, in the non-recovered condition, thus remarkably reducing any issues with distributing the heating energy. Moreover, much cheaper wire materials can be used compared to using typical resistance wires.

In particular, according to the present invention, a heat shrink component has first dimensions in an expanded state and second dimensions in a shrunk state, at least one of the first dimensions being larger than the second dimensions. The heat shrink component may comprise an electrically insulating heat shrink layer and at least one heating unit that is arranged in thermal contact to at least a part of said heat shrink layer, said heating unit being operable to heat up the heat shrink layer to its heat shrink temperature. The heat shrink temperature is defined as the temperature to which the heat shrink layer has to be heated in order to recover towards its original configuration. The heating unit comprises at least one electrically conductive lead with an electrical conductivity of more than 4·10⁷ S/m and a resulting resistance of 0.3 Ω to 6.0 Ω (at 23 °C) and comprises aluminium and/or copper.

According to the present invention, the heating unit further comprises a plurality of heating elements interconnected by an electrically conductive lead. Advantageously, such a combination of sections where the heating energy is generated by the resistance of the conductor with sections where heat is for instance generated by other mechanisms allows adapting the heating to varying geometry over the heat shrink component. For instance, regions with higher thickness can be supplied with higher heat density compared to regions with lower material thickness. In particular, at least one of the plurality of heating elements may comprise a semiconductor heating element.

According to the present invention, the electrically insulating heat shrink layer is formed at least partly as a sleeve with a longitudinal axis for covering at least one electrical connection. Such sleeves are for instance part of high-voltage cable accessories.

High-voltage cable accessories are in use for the connection of high-voltage power cables to electrical equipment such as overhead lines, transformers, search arrestors, switchgears etc. They provide the function to either insulate or control the electrical field of power cables at different ambient conditions.

The term "high-voltage" as used in the following is intended to relate to voltages above approximately 1 kV. In particular, the term high-voltage is intended to comprise the usual nominal voltage ranges of power transmission, namely medium voltage, MV, (about 3 kV to about 72 kV), high-voltage, HV, (about 72 kV to about 245 kV), and also extra high-voltage (up to presently about 500 kV). Of course also higher voltages may be considered in the future. These voltages may be direct current (DC) or alternating current (AC) voltages. In the following, the term "high-voltage cable" is intended to signify a cable that is suitable for carrying electric current of more than about 1 A at a voltage above approximately 1 kV. Accordingly, the term "high-voltage accessory" is intended to signify a device that is suitable for interconnecting high-voltage facilities and/or high-voltage cables. In particular, a high-voltage accessory may either be an end termination or a cable joint.

The present invention is also applicable to the so-called "low-voltage", LV, range that relates to voltages below 1 kV. The principles of the present invention may further be applied to heat shrink products used for electronic applications.

The expression "sleeve" according to the present invention is intended to signify straight tube shaped sleeves as well as differently shaped covers for branch joints, elbows, bends, breakouts, wrap-arounds, sheds, and the like.

Advantageously, the heating unit is arranged on an outer surface of the sleeve. This allows for an easy manufacturing of the heat shrink component. The heating unit may be arranged directly on the outer surface of the sleeve or with additional layers between the sleeve and the heating unit. However, the heating unit may of course also be arranged on the inner surface of the sleeve or within the sleeve, in order to protect the heating unit from being damaged before the installation takes place.

Advantageously, the heating unit has at least partly intimate contact to at least parts of the heat shrink component to allow for heat conduction.

According to a further advantageous embodiment, the electrically conductive lead encompasses said sleeve forming a plurality of rings being arranged around the longitudinal axis of said sleeve. These rings may electrically be connected to each other either in a series connection or in a parallel connection. The advantage of such a structure is that the heat can be applied uniformly around the circumference of the sleeve in a reliable manner. The distances between the individual rings may be equal along the longitudinal axis of the sleeve. Alternatively, regions where the rings are arranged closer to each other may alternate with regions where the rings are distanced further apart from each other. The rings have a smaller distance where a larger amount of heat is needed, for instance in sections with a higher material thickness.

A much easier and cheaper solution is to choose an arrangement where the electrically conductive lead encompasses said sleeve forming a helix around the longitudinal axis of said sleeve. In this case, the lead can be formed by one continuous wire that may be wound around the outer surface of the sleeve. Also in case of a helically wound lead, the distances between the individual turns can be varied along the longitudinal axis of the sleeve.

According to a further advantageous embodiment of the present invention, the electrically conductive lead comprises a plurality of interconnected elongated sections that extend along the longitudinal axis of said sleeve and that are distributed around the circumference of the sleeve. These elongated sections may either extend in parallel to the longitudinal axis of the sleeve or may include an angle with the longitudinal axis. The individual sections may be interconnected in series or at least partly in parallel. The individual sections may either be uniformly distributed around the circumference of the sleeve, or have varying distances with respect to the adjacent sections.

The ring shaped, spirally wound, and longitudinal arrangements may also be combined with each other in one single layer or in several layers that are arranged to overlie each other at least partly.

According to an advantageous embodiment of the present invention, the electrically conductive lead is formed by a metal wire having a cross-section with a round, oval, or polygonal shape. As mentioned above, the cross-section is formed to be small enough to generate an overall ohmic resistance that leads to a sufficient heating also with small safety voltages.

The electrically conductive lead according to the present invention may also be formed by an electrically conductive film. Such a thin electrically conductive film may be fabricated by etching and photolithography, or screen printing technologies as this is known to a person skilled in the art. Moreover, the electrically conductive film may either be fabricated directly on the heat shrink layer or on a carrier foil that is attached to the heat shrink layer after the metallization pattern has been structured.

According to the present invention, the electrically conductive lead may be fabricated from copper or aluminium. Advantageously, no expensive heating wire alloys, such as nickel chrome iron alloys or Constantan ^{®} are needed. However, also metal alloys having the high conductivity according to the present invention may be used to form the electrically conductive lead. In particular, the electrically conductive lead may have an electrical conductivity of more than 4·10⁷ S/m and comprises copper.

According to the present invention, the electrically conductive lead comprises a plurality of sections which are electrically connected in series and/or in parallel. For instance, sections of the ring shaped, spirally wound, and longitudinal arrangements mentioned above may be connected with each other in series and/or in parallel. The present invention uses a power source for being connected to at least one heating unit, said heating unit being operable to heat up a heat shrink layer to its heat shrink temperature, wherein the power source is operable to provide a DC voltage that is below 60 V or an AC voltage of maximal 25 V RMS, preferably, a battery generated DC voltage of 24 V is used.

The present invention further relates to a method of assembling a heat shrink component that has first dimensions in an expanded state and second dimensions in a shrunk state, at least one of the first dimensions being larger than the corresponding second dimension. The method comprises the steps according to claim 6.

Advantageously, a safety voltage, provided for instance from a battery, is used to heat up the heating unit. In the context of the present invention, "safety voltage" means for example a DC voltage that is below 60 V or an AC voltage of 25 V RMS. Preferably, a battery generated DC voltage of 24 V is used.

According to an advantageous embodiment, the heat shrink component is an LV, MV, or HV cable accessory.

The method according to the present invention requires that at least a part, in particular the surface, of the heat shrink component is heated to a temperature of at least 120 °C during a heating time of 20 min or less, depending on the wall thickness of the heat shrink component. This short time is compatible with the time span for shrinking conventional products with an open flame.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:
- **FIG. 1**: is a schematic representation of a heat shrinking process;
- **FIG. 2**: is a schematic representation of a detail of the heating unit according to a first embodiment of the present invention;
- **FIG. 3**: is a schematic representation of a detail of the heating unit according to a further embodiment of the present invention;
- **FIG. 4**: is a schematic representation of a detail of the heating unit according to a further embodiment of the present invention;
- **FIG. 5**: is a schematic representation of a detail of the heating unit according to a further embodiment of the present invention;
- **FIG. 6**: is a comparison of several cross-sections of an electrically conductive lead according to the present invention;
- **FIG. 7**: is a comparison of the cross-section of a conventional resistance heating wire to several cross-sections of an electrically conductive lead according to the present invention;
- **FIG. 8**: is a schematic representation of a detail of the heating unit according to a further embodiment of the present invention.

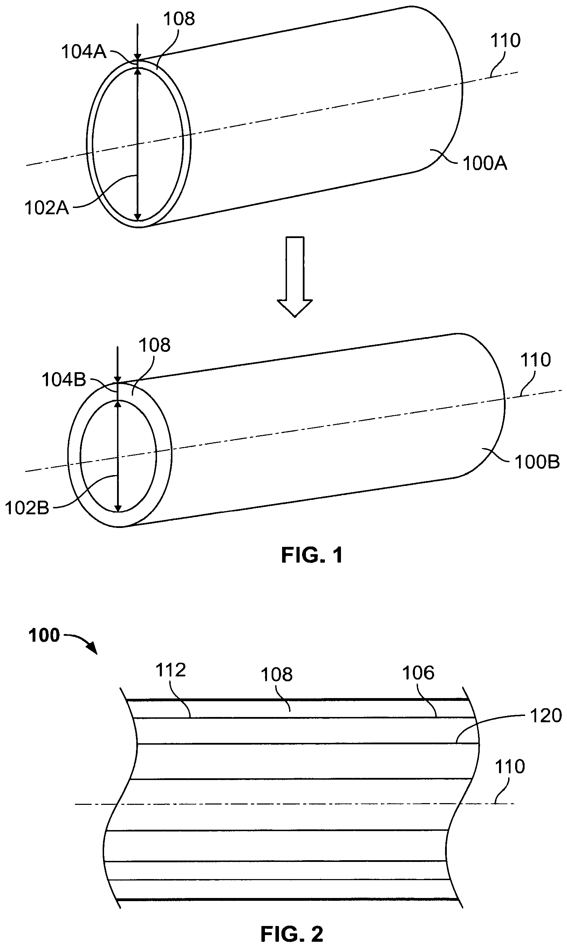

The present invention will now be further explained referring to the Figures, and firstly referring to Figure 1. Fig. 1 schematically illustrates the heat shrinking process of a heat shrinkable joint sleeve 100A, 100B. The heat shrink sleeve 100A is in the expanded state where it has first dimensions. In particular, the heat shrink sleeve 100A in the expanded state has an inner diameter 102A which is larger than the outer diameter of a component to be covered (not shown in the Figures) and a wall thickness 104A that is thinner than in the finally mounted state.

By applying heat, the heat shrink sleeve is transformed from the expanded state 100A into a heat shrink sleeve in the shrunk state 100B (indicated by the arrow). In order to be shrunk under the influence of heat, the sleeve 100 comprises at least one heat shrink layer 108.

The present invention utilizes a heat-recoverable article (an independently dimensionally heat-unstable article) as the heat shrink layer 108. Of course, the heat shrink layer can be fabricated from any suitable material, as this is known to a person skilled in the art. Moreover, also multilayer arrangements that additionally comprise elastic layers are encompassed by the present invention. Heat shrink layers and/or elastic layers may comprise electrically insulating and/or electrically semi-conductive and/or conductive layers or components.

The shrunk sleeve 100B has an inner diameter 102B that fits tightly over the covered component (not shown in the figures) and an enhanced wall thickness 104B as compared to the expanded state. As this is known to a person skilled in the art, the heat shrink process leads to a reduction of diameter of up to 75% of the diameter in the expanded state. As already mentioned above, the principles according to the present invention can be applied to straight tube shaped sleeves 100 as well as to differently shaped covers for branch joints, elbows, bends, and the like. The component onto which the sleeve 100 is shrunk may be cylindrical or it may have regions with a cross-section that is polygonal and/or that is varying along the longitudinal axis of the component.

According to the present invention, the heat shrinking step is performed by applying electrical energy via electrically conductive leads 106 with an electrical conductivity of more than 3·10⁷ S/m which comprise copper and/or aluminium. Figures 2 to 5 illustrate examples of how the electrically conductive leads 106 that form a heating unit 120 can be arranged on a heat shrink product. The leads 106 may be positioned with direct contact to a heat shrink layer or may be positioned on a layer of non-shrink material, such as an elastomeric layer or a thermoplastic layer. Terminals are led to the outside for connecting a power source (not shown in the figures). Preferably, the power source is a battery supplying a DC voltage of e. g. 24 V. The entire length of the electrically conductive lead 106 is determined by the particular diameter and the resistance value that is to be reached and amounts to around 1 to 15 m when choosing a diameter in a range of 0.1 mm to 0.4 mm.

As can be seen from Fig. 2, according to a first advantageous embodiment of the present invention, a plurality of elongated wire sections 112 are arranged in parallel to a longitudinal axis 110 of the heat shrink sleeve 100. The individual wire sections 112 may be serially interconnected in the fashion of a meandering structure to form one continuous electrical lead 106. Additionally, some of the longitudinal sections 112 may be interconnected to form an elongated closed loop, a plurality of those loops being interconnected in parallel. The sections 112 may either be arranged on the outside or on the inner surface of the heat shrink sleeve 100 moreover, they may also be covered by further layers (not shown in the figures). The sections 112 may also be arranged in different planes seen from the centre line 110.

Arranging the wire sections 112 in parallel to the longitudinal axis 110 of the heat shrink sleeve 100 is also advantageous from an electro physical point of view because undesired coil structures can be avoided. If necessary, the loops of wire interconnecting the wire sections 112 for providing a closed path for the current may be arranged at the periphery of the sleeve 100 in a way that they can be cut off after the shrinking process is completed, leaving in place only the longitudinal wire sections.

The embodiment with the longitudinal wire sections 112 has the advantage, that upon shrinking of the heat shrink layer 108 the wire sections 112 become arranged closer to each other, but are not significantly deformed or dislocated. If the covered component has a polygonal cross-section and/or has dimensions that vary along the longitudinal axis, the wire sections conform to this outer silhouette to some extent. Still, no sharp edges or disruptions during the heat shrinking process can occur. This means that separations or areas of increased resistance due to strong deformation of the wires are less likely.

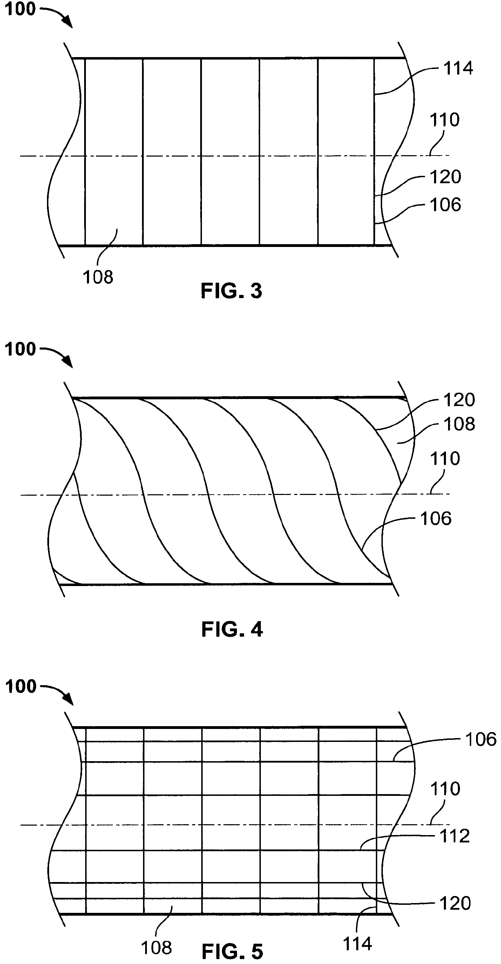

Fig. 3 shows an embodiment where a plurality of ring-shaped wires 114 is arranged on the sleeve 100 to form the electrically conductive lead 106. These wire-rings 114 are arranged equidistantly along the longitudinal axis 110 and are essentially perpendicular to the longitudinal axis 110. Of course, the rings can also be arranged with varying distances between each other. Moreover, when using an elliptical shape instead of a circular geometry, the rings 114 can also be arranged to include an angle other than 90° with the longitudinal axis 110.

The rings 114 may electrically be connected in series and/or in parallel. For a serial connection, the ring may not be entirely closed around the circumference of the heat shrink sleeve 100.

Fig. 4 depicts an arrangement where one continuous electrically conductive lead 106 is wound in a helical configuration around the heat shrink layer 108. This configuration is particularly easy to be assembled.

It is apparent to a person skilled in the art that the above explained arrangements according to Figures 2, 3, and 4 can also be combined with each other as this is exemplarily depicted in Fig. 5. According to this embodiment, one layer of longitudinal sections 112 is combined with one layer of ring-shaped wires 114, wherein it is arbitrary which layer is the top layer and which one the bottom layer. Also more than two layers can be combined to form a heating unit according to the present invention. Electrically, these layers may either be connected in parallel or serially.

Advantageously, the wires in the different layers are to be electrically insulated against wires of another layer. This may be achieved by using wires that are individually covered with an electrical insulation and/or by arranging an insulating material between adjacent layers of wire.

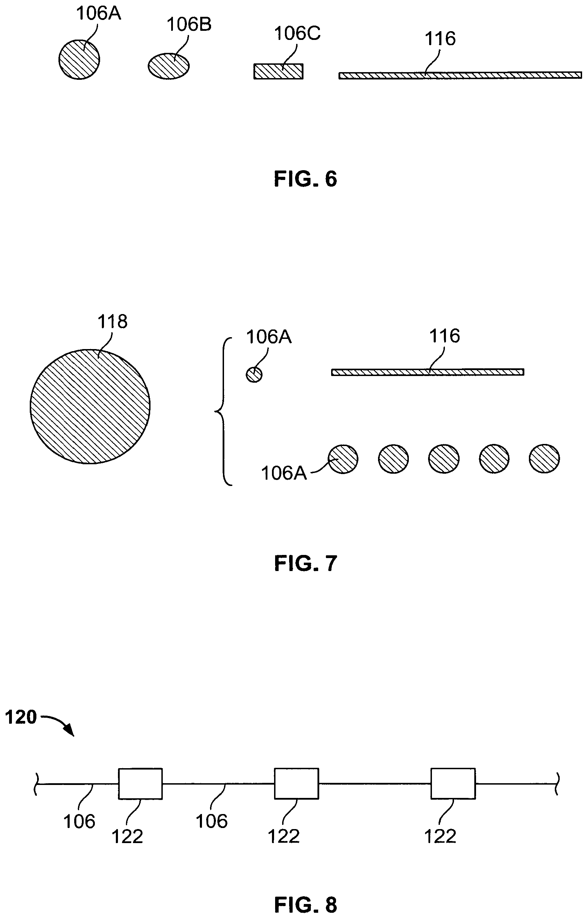

With reference to Figure 6, several examples of electrically conductive leads 106 according to the present invention are explained. The inventors of the present invention have recognized that an electrical resistance suitable for generating temperatures around 120°C and up to 450°C from safety voltages (e. g. 24 V DC) can also be realized with a highly conductive material when reducing the cross-sectional area and/or enhancing the length accordingly. The cross-section of the wires 106 may be circular (electrically conductive lead 106A), elliptic (electrically conductive lead 106B), or polygonal (electrically conductive lead 106C). Furthermore, the electrically conductive lead may also be formed by a thin film 116. It has to be noted, that the drawings are not exactly to scale throughout the Figures. In particular, the thickness of the electrically conductive film 116 is exaggerated.

The electrically conductive film 116 may for instance be formed from a metallization layer that is etched by means of a photolithography process. Alternatively, also screen printing or other printing techniques can be used for depositing the electrically conductive film 116 on the heat shrink layer, or on an additional layer, i. e. a thermoplastic film.

With reference to Figure 7, the electrical resistance of the electrically conductive lead according to the present invention will be explained in more detail. Fig. 7 shows arrangements that have the same electrical resistance, leading to the same heating effect when powered with the same voltage. In particular, the cross section of a standard resistance heating wire 118 is compared to a copper wire 106 or an electrically conductive copper film 116. When assuming that the copper wire 106A and the electrically conductive film 116 are having only 1% of the specific resistance of the resistance wire, they need to have a cross sectional area of only 1% of the cross-sectional area of the resistance wire 118 in order to provide the same overall resistance for a piece of lead having the same length.

Alternatively, a copper wire 106A having 20% of the cross-sectional area of the resistance wire 118 has the same resistance as the resistance wire 118, if the copper wire 106A has 5 times the length of the resistance wire 118.

Due to economic and reliability considerations, the number and diameter of the heating wires 106 needs to be within certain limits. In case that the wires 106 have very small diameters, their numbers and/or length need to be reduced. Otherwise, the resistance increases too much and voltages of 24 V or below cannot generate a sufficiently high current to heat up the wires to temperatures of at least 110°C. On the other hand, if the wires 110 have too large cross-sections, their resistance may become too low. Then the length has to be increased, in order to increase the resistance. Otherwise, the wires 106 would not be heated up sufficiently. Thereby costs are increased. A further option is to use (at least in particular areas of the heat shrink component) two or more electrical circuits of heating wires which are connected in parallel. The electrical current then splits up according to the relative resistance of the circuits. This allows choosing wires with smaller cross-sections, while achieving the same resulting resistance as with a larger size wire. In other words, two wires are connected in parallel and have each half of the cross-section compared to a benchmark wire. This principle, however, gets to some limits regarding economic considerations, such as the cost of fine wires relative to standard wires, and regarding reliability issues, because handling of extremely fine wires with diameters of less than 100 µm is cumbersome.

In addition to only using the electrically conductive lead 106 as the heating unit 120, also additional heating elements 122 are provided. This embodiment is shown in Fig. 8.

According to one advantageous embodiment, the electrically conductive lead 106 generates only negligible amounts of heat. The main part of the heat is generated by the additional heating elements 122. The heating elements 122 may for instance be formed from semiconductor heating elements. The electrically conductive leads 106 that are interconnecting the heating elements 122 may either be formed as sections of wire, or by film-shaped electrically conductive leads. Any of the diameters explained with reference to Figure 6 can be employed. Advantageously, the semiconductor heating elements 122 may have a positive temperature coefficient (PTC) so that an inherent overheating protection is provided.

Furthermore, according to a further advantageous embodiment, sensors may be added to the heat shrink component. These sensors can be configured to monitor and/or drive the heating and shrinking process and give feedback for instance to the cable jointer and/or the electric drive system e. g. whether the installation has been finished successfully. In particular, when realizing the heating unit as a thin film arrangement, the sensors and the heating unit can be formed on a common flexible substrate that is attached to the sleeve.

In summary, the present invention provides options to shrink widely used energy products, like LV, MV, and even HV joint bodies, terminations, sleeves (such as rejacketing sleeves), and molded parts (such as break out boots and caps) without using an open flame and instead using electrical energy. Because the application typically is a field installation, the power source beneficially uses batteries, either available in the van of the cable jointer staff or to be carried to the place of installation. Alternatively, a generator, either available in the van or transportable over limited distances, can be used. For safety reasons, the voltage can be limited to values in the magnitude of 20 V, at maximum 24 V. In order to be compatible with installation times that are reached using open flames, the shrink times of a typical MV joint body should not exceed a maximum of 10 minutes.

The present invention can advantageously be employed with the following exemplary specific dimensions and characteristics.

In contrast to conventional resistance wires, the conductivity is at least 3·10⁷ S/m. The power source provides preferably a voltage that is a DC voltage below 60 V or an AC voltage of 25 V RMS.

Moreover, the cross-sectional area of the heating conductor is between 0.007 mm² and 0.8 mm², equaling to wires of 0.1 to 1.0 mm diameter. Conductive films must have according dimensions, typically these films have thicknesses in the range of 5 µm to 25 µm. The temperature of the conductor during the heating is at least 120 °C, max. 450 °C. The value of 120°C is a typical shrink temperature for heat shrink products. There are variants that shrink at 110°C and a very special material which is not used on energy products starts to shrink at 65°C. Given temperature losses to the environment, the temperature of the conductors must be far above 120°C.

The above parameters define a broad working space. Depending on the geometry of the heat shrink product and the conductors the heating system can be defined for instance according to the following examples.

A typical MV joint body has a wall thickness of 3.5 mm of the heat shrink layer (plus elastomeric layer), a length of 420 mm and an outer diameter of 68 mm (surface area is 9 dm²). In successful trials six heating units with 3.3 meter of wire each (diameter 0.22 mm) were used. With a power source providing 24 V these six heating units were connected in parallel and heated up to 200°C to 350°C temperature of the wires. The shrink time was 10 min, using thermal insulation and heat spreading means.

If the wire diameters are chosen smaller, then each heating unit must have less meters of wire. Accordingly, more than six heating units are to be configured to allow a 24 V power source to heat up the heat shrink component to the required temperatures.

If another heat shrink product has less surface area, then a lower number of heating units (thus less meters of wire) are needed.

If another heat shrink product has a lower wall thickness, then a comparably lower number of heating systems and less meters of wire are needed. The dependency on the wall thickness does not seem linear. It appears that even a stack of multiple heat shrink sleeves resulting in 10 mm total wall thickness can be heated with about the same settings as the typical MV joint body having a wall thickness of 3.5 mm. There is, of course, a dependency on the overall shrink behavior of the particular heat shrink material. By adapting the composition of the heat shrink material, the shrink temperature and the ease of shrinking can be varied.

**REFERENCE NUMERALS**

| **Reference Numeral** | **Description** |
|---|---|
| 100, 100A, 100B | Heat shrink sleeve, heat shrink component |
| 102A, 102B | Inner diameter |
| 104A, 104B | Wall thickness |
| 106, 106A, 106B, 106C | Electrically conductive lead |
| 108 | Heat shrink layer |
| 110 | Longitudinal axis |
| 112 | Longitudinal wire section |
| 114 | Wire ring |
| 116 | Electrically conductive film |
| 118 | Resistance wire |
| 120 | Heating unit |
| 122 | Heating element |

## Claims

1. Heat shrink component that has first dimensions (102A, 104A) in an expanded state and second dimensions (102B, 104B) in a shrunk state, at least one of the first dimensions (102A) being larger than the corresponding second dimension (102B) and said heat shrink component (100, 100A, 100B) comprising:
a heat shrink layer (108), and
at least one heating unit (120) that is arranged in thermal contact to at least a part of said heat shrink layer (108), said heating unit (120) being operable to heat up the heat shrink layer (108) to its heat shrink temperature,
wherein the heating unit (120) comprises at least one electrically conductive lead (106, 116) with an electrical conductivity of more than 3·10⁷ S/m and comprises aluminum and/or copper,
wherein the heat shrink layer (108) is formed at least partly as a sleeve with a longitudinal axis (110) for covering at least a part of an electrical connection and/or at least a part of a termination,
wherein said heating unit (120) is arranged to at least partly encompass said sleeve (100),
wherein said electrically conductive lead (106) encompasses said sleeve forming a plurality of rings (114) being arranged around the longitudinal axis (110) of said sleeve (100), and/or wherein said electrically conductive lead (106) encompasses said sleeve (100) forming a helix around the longitudinal axis (110) of said sleeve, and/or wherein the electrically conductive lead (106) comprises a plurality of interconnected elongated sections (112) that extend along the longitudinal axis (110) of said sleeve (100) and that are distributed around the circumference of the sleeve,
wherein the electrically conductive lead (106, 116) comprises a plurality of sections which are electrically connected in series and/or in parallel, and
wherein said heating unit (120) further comprises a plurality of heating elements (122) interconnected by said electrically conductive lead (106).

2. Heat shrink component according to claim 1, wherein at least one of the plurality of heating elements (122) comprises a semiconductor heating element.

3. Heat shrink component according to one of the preceding claims, wherein the electrically conductive lead (106) is formed by a metal wire having a cross-section with a round, oval, or polygonal shape.

4. Heat shrink component according to one of the claims 1 to 3, wherein the electrically conductive lead (106) comprises an electrically conductive film (116).

5. Heat shrink component according to one of the preceding claims, wherein the electrically conductive lead (106, 116) has an electrical conductivity of more than 4·10⁷ S/m and comprises copper.

6. Method of assembling a heat shrink component according to claim 1, the method comprising the following steps:
providing the heat shrink component (100) in the expanded state, said heat shrink component (100) comprising a heat shrink layer (108), and at least one heating unit (120) that is arranged in thermal contact to at least a part of said heat shrink layer (108), said heating unit (120) being operable to heat up the heat shrink layer (108) to its heat shrink temperature, wherein the heating unit (120) comprises at least one electrically conductive lead (106) with an electrical conductivity of more than 3·10⁷ S/m and comprises aluminum and/or copper;
connecting an electrical power source to the heating unit (120);
heating up the heating unit (120) for at least a part of the time, preferably the beginning, when the heat shrink component (100) shrinks to the second dimensions;
providing the electrically conductive lead (106, 116) with a plurality of sections which are electrically connected in series and/or in parallel.

7. Method according to claim 6, wherein the power source is operable to provide a DC voltage that is below 60 V or an AC voltage of 25 V RMS.

8. Method according to claim 6 or 7, wherein the heat shrink component (100) is an LV, MV, or HV cable accessory.

9. Method according to one of the claims 6 to 8, wherein a part of the heat shrink component (108) is heated to a temperature of at least 120 °C during a heating time of 20 min or less.

10. Method according to one of the claims 6 to 9, wherein the electrically conductive lead (106, 116) has an electrical conductivity of more than 4·10⁷.

## Patentansprüche

1. Wärmeschrumpfkomponente, die erste Abmessungen (102A, 104A) in einem gedehnten Zustand und zweite Abmessungen (102B, 104B) in einem geschrumpften Zustand aufweist, wobei wenigstens eine der ersten Abmessungen (102A) größer als die entsprechende zweite Abmessung (102B) ist, wobei die Wärmeschrumpfkomponente (100 100A, 100B) umfasst:
eine Wärmeschrumpfschicht (108), und
wenigstens eine Heizeinheit (120), die in einem thermischen Kontakt mit wenigstens einem Teil der Wärmeschrumpfschicht (108) ist, wobei die Heizeinheit (120) betrieben werden kann für das Erhitzen der Wärmeschrumpfschicht (108) zu ihrer Wärmeschrumpftemperatur,
wobei die Heizeinheit (120) wenigstens eine elektrisch leitende Zuleitung (106, 116) umfasst, die eine elektrische Leitfähigkeit von mehr als 3 • 10⁷ S/m aufweist und Aluminium und/oder Kupfer umfasst,
wobei die Wärmeschrumpfschicht (108) wenigstens teilweise als eine Hülse mit einer Längsachse (110) für das Bedecken wenigstens eines Teils einer elektrischen Verbindung und/oder wenigstens eines Teils einer Terminierung ausgebildet ist,
wobei die Heizeinheit (120) derart angeordnet ist, das sie die Hülse (100) wenigstens teilweise umgibt,
wobei die elektrisch leitende Zuleitung (106) die Hülse umgibt und eine Vielzahl von Ringen (114) bildet, die um die Längsachse (110) der Hülse (100) herum angeordnet sind, und/oder wobei die elektrisch leitende Zuleitung (106) die Hülse (100) umgibt und eine Helix um die Längsachse (110) der Hülse herum bildet, und/oder wobei die elektrisch leitende Zuleitung (106) eine Vielzahl von miteinander verbundenen länglichen Abschnitten (112) umfasst, die sich entlang der Längsachse (110) der Hülse (100) erstrecken und um den Umfang der Hülse herum verteilt sind,
wobei die elektrisch leitende Zuleitung (106, 116) eine Vielzahl von Abschnitten umfasst, die elektrisch in Reihe und/oder parallel verbunden sind, und
wobei die Heizeinheit (120) weiterhin eine Vielzahl von Heizelementen (122) umfasst, die durch die elektrisch leitende Zuleitung (106) miteinander verbunden sind.

2. Wärmeschrumpfkomponente nach Anspruch 1, wobei wenigstens eines aus der Vielzahl von Heizelementen (122) ein Halbleiterheizelement ist.

3. Wärmeschrumpfkomponente nach einem der vorstehenden Ansprüche, wobei die elektrisch leitende Zuleitung (106) durch einen Metalldrahtmit mit einem Querschnitt mit einer runden, ovalen oder polygonalen Form gebildet wird.

4. Wärmeschrumpfkomponente nach einem der Ansprüche 1 bis 3, wobei die elektrisch leitende Zuleitung (106) eine elektrisch leitende Folie (116) umfasst.

5. Wärmeschrumpfkomponente nach einem der Ansprüche, wobei die elektrisch leitende Zuleitung (106, 116) eine elektrische Leitfähigkeit von mehr als 4 • 10⁷ S/m aufweist und Kupfer umfasst.

6. Verfahren zum Montieren einer Wärmeschrumpfkomponente nach Anspruch 1, wobei das Verfahren die folgenden Schritte umfasst:
Vorsehen der Wärmeschrumpfkomponente (100) in dem gedehnten Zustand, wobei die Wärmeschrumpfkomponente (100) eine Wärmeschrumpfschicht (108) und wenigstens eine Heizeinheit (120), die in einem thermischen Kontakt mit wenigstens einem Teil der Wärmeschrumpfschicht (108) angeordnet ist, umfasst, wobei die Heizeinheit (120) betrieben werden kann, um die Wärmeschrumpfschicht (108) zu ihrer Wärmeschrumpftemperatur zu erhitzen, wobei die Heizeinheit (120) wenigstens eine elektrisch leitende Zuleitung (106) umfasst, die eine elektrische Leitfähigkeit von mehr als 3 • 10⁷ S/m aufweist und Aluminium und/oder Kupfer umfasst,
Verbinden einer Stromquelle mit der Heizeinheit (120),
Erhitzen der Heizeinheit (120) für wenigstens einen Teil der Zeit und vorzugsweise am Anfang, wenn die Wärmeschrumpfkomponente (100) zu den zweiten Abmessungen schrumpft,
Vorsehen der elektrisch leitenden Zuleitung (106, 116) mit einer Vielzahl von Abschnitten, die elektrisch in Reihe und/oder parallel verbunden sind.

7. Verfahren nach Anspruch 6, wobei die Stromquelle betrieben werden kann, um eine Gleichspannung unter 60 V oder eine Wechselspannung von 25 V RMS vorzusehen.

8. Verfahren nach Anspruch 6 oder 7, wobei die Wärmeschrumpfkomponente (100) ein Niederspannung (LV), Mittelspannung (MV) oder Hochspannung (HV)-Kabelzubehör ist.

9. Verfahren nach einem der Ansprüche 6 bis 8, wobei ein Teil der Wärmeschrumpfkomponente (108) zu einer Temperatur von wenigstens 120°C während einer Heizzeit von 20 min oder weniger erhitzt wird.

10. Verfahren nach einem der Ansprüche 6 bis 9, wobei die elektrisch leitende Zuleitung (106, 116) eine elektrische Leitfähigkeit von mehr als 4 • 10⁷ aufweist.

## Revendications

1. Composant thermorétractable qui a des premières dimensions (102A, 104A) dans un état expansé et des secondes dimensions (102B, 104B) dans un état rétracté, au moins une des premières dimensions (102A) étant supérieure à la seconde dimension correspondante (102B) et ledit composant thermorétractable (100, 100A, 100B) comprenant :
une couche thermorétractable (108), et
au moins une unité de chauffage (120) qui est disposée en contact thermique avec au moins une partie de ladite couche thermorétractable (108), ladite unité de chauffage (120) étant opérationnelle pour chauffer la couche thermorétractable (108) jusqu'à sa température de rétraction thermique,
dans lequel l'unité de chauffage (120) comprend au moins un conducteur électriquement conducteur (106, 116) ayant une conductivité électrique supérieure à 3·10⁷ S/m et comprend de l'aluminium et/ou du cuivre,
dans lequel la couche thermorétractable (108) est formée au moins partiellement sous forme d'un manchon avec un axe longitudinal (110) pour recouvrir au moins une partie d'une connexion électrique et/ou au moins une partie d'une terminaison,
dans lequel ladite unité de chauffage (120) est agencée pour englober au moins partiellement ledit manchon (100),
dans lequel ledit conducteur électriquement conducteur (106) englobe ledit manchon en formant une pluralité d'anneaux (114) agencés autour de l'axe longitudinal (110) dudit manchon (100), et/ou dans lequel ledit conducteur électriquement conducteur (106) englobe ledit manchon (100) en formant une hélice autour de l'axe longitudinal (110) dudit manchon, et/ou dans lequel le conducteur électriquement conducteur (106) comprend une pluralité de sections allongées interconnectées (112) qui s'étendent le long de l'axe longitudinal l'axe (110) dudit manchon (100) et qui sont réparties autour de la circonférence du manchon,
dans lequel le conducteur électriquement conducteur (106, 116) comprend une pluralité de sections qui sont connectées électriquement en série et/ou en parallèle, et dans lequel ladite unité de chauffage (120) comprend en outre une pluralité d'éléments chauffants (122) interconnectés par ledit conducteur électriquement conducteur (106).

2. Composant thermorétractable selon la revendication 1, dans lequel au moins l'un de la pluralité d'éléments chauffants (122) comprend un élément chauffant à semiconducteur.

3. Composant thermorétractable selon l'une des revendications précédentes, dans lequel le conducteur électriquement conducteur (106) est formé par un fil métallique ayant une section transversale de forme ronde, ovale ou polygonale.

4. Composant thermorétractable selon l'une des revendications 1 à 3, dans lequel le conducteur électriquement conducteur (106) comprend un film électriquement conducteur (116).

5. Composant thermorétractable selon l'une des revendications précédentes, dans lequel le conducteur électriquement conducteur (106, 116) a une conductivité électrique supérieure à 4·10⁷ S/m et comprend du cuivre.

6. Procédé d'assemblage d'un composant thermorétractable selon la revendication 1, le procédé comprenant les étapes suivantes consistant à :
fournir le composant thermorétractable (100) dans l'état expansé, ledit composant thermorétractable (100) comprenant une couche thermorétractable (108), et au moins une unité de chauffage (120) qui est agencée en contact thermique avec au moins une partie de ladite couche thermorétractable (108), ladite unité de chauffage (120) étant opérationnelle pour chauffer la couche thermorétractable (108) jusqu'à sa température de rétraction thermique, dans lequel l'unité de chauffage (120) comprend au moins un conducteur électriquement conducteur (106) ayant un conductivité supérieure à 3·10⁷ S/m et comprend de l'aluminium et/ou du cuivre ;
connecter une source d'énergie électrique à l'unité de chauffage (120) ;
chauffer l'unité de chauffage (120) pendant au moins une partie du temps, de préférence le début, pendant que le composant thermorétractable (100) se rétracte jusqu'aux secondes dimensions ;
munir le conducteur électriquement conducteur (106, 116) d'une pluralité de sections qui sont connectées électriquement en série et/ou en parallèle.

7. Procédé selon la revendication 6, dans lequel la source d'alimentation est opérationnelle pour fournir une tension continue (DC) qui est inférieure à 60 V ou une tension alternative (AC) de 25 V RMS.

8. Procédé selon la revendication 6 ou 7, dans lequel le composant thermorétractable (100) est un accessoire de câble LV, MV ou HV.

9. Procédé selon l'une des revendications 6 à 8, dans lequel une partie du composant thermorétractable (108) est chauffée à une température d'au moins 120°C pendant un temps de chauffage de 20 min ou moins.

10. Procédé selon l'une des revendications 6 à 9, dans lequel le conducteur électriquement conducteur (106, 116) a une conductivité électrique supérieure à 4·10⁷.
